# EUROPEAN PATENT APPLICATION

(11) **EP 4 601 169 A1**
(43) Date of publication of application: **13.08.2025**
(21) Application number: 24305207.3
(22) Date of filing: 08.02.2024
(51) Int. Cl.: H02M 1/00, H02M 1/08, H02M 1/32, H02M 3/335

(54) **SUPPLY CIRCUIT FOR RENDERING CONTROLLED SUPPLY POWER**

(71) Applicant: SCHNEIDER ELECTRIC INDUSTRIES SAS, 92500 Rueil-Malmaison (FR)
(72) Inventor: EIERMANN, Stefan, 74746 Höpfingen (DE)
(74) Representative: Manitz Finsterwald Patent- und Rechtsanwaltspartnerschaft mbB

(57) **Abstract**

A power supply circuit (1) comprises control signal circuitry (10) comprising power control command generation means (11) for receiving or generating a power supply command (psc) and for generating internal switching control signals (iscs) according to the power supply command (pcs) for controlling power supply, and a first galvanic separation stage (12) receiving at its input the internal switching control signals (iscs) and producing at its separation output (12-1) output control signals (ocs). It also comprises power control circuitry (20) with power input terminals (21) connectable to an input power supply, a signal input (22) connected to said separation output (12-1), a semiconductor power switch (23) for switching on and off power drawn from said power input terminals (21) in accordance with the output control signal (ocs) from said signal input (22), a first transformer (24) comprising a first primary winding (24-1) connected to said semiconductor power switch (23) and to one of said power input terminals (21) and a first secondary winding (24-2) inductively coupled with said first primary winding (24-1), and a power output circuit (27) connected to said first secondary winding (24-2) and having power output terminals (28) for supplying controlled supply power (csp).

## Description

The Invention relates to a supply circuit for rendering a controlled supply power for electric devices. The considered supply power is electrical power of AC or DC. The considered consumers may be consumers for which in some respect safety considerations are relevant. Safety considerations may either involve device safety by protecting the device against non-suiting power supply, and/or may involve environment safety by protecting the environment of the device against device malfunction due to a malfunctioning power supply. As an example, one may assume an electric motor driving in a more or less open environment a moveable carrier that might collide with other components in the environment, such as other carriers, if power supply is for the one or other reason inappropriate.

Power supply of components becomes more and more complex. Primary constant power e.g. from a battery block or from a power grid may go through amplitude conversions and/or frequency conversion and/or power control. In case of AC, some of this may be accomplished with transformers. In case of DC, DC converters are needed that may be based on the chopper principle, or may use a full intermediate AC conversion. For power control, circuits may be provided such as chopper circuits or PWM circuits (PWM = Pulse Width Modulation) from DC or phase angle control on leading and/or trailing edge from AC, or the like. The common effect of all these developments is that on the one hand side, more and more components are involved in such power supplies so that also the risk of malfunction increases corresponding to the number of involved components, and that on the other hand side, it gets more and more tricky to quickly cut off power supply in case of emergency because in the chain of cooperating components, the malfunctioning one might not be accessible or immediately recognizable for suitable interaction.

DE 2408381 discloses a control circuit arrangement for power semiconductors. It employs galvanically separated PWM DC.

US 6807071 B1 discloses a transformer isolated driver. An isolation transformer connects to the gate of a MOSFET.

Known are also choppers that feed chopped AC into a transformer primary winding for drawing amplitude-transformed induced AC power from the secondary winding.

The known circuits lack sufficient protection from malfunctioning components. If, for example, in a PWM driver a transistor fuses, it may be continuously "on" and may thus lead to continuous power supply. Then, even if some kind of emergency switch switches off certain components, they may not have the desired effect of bringing the system quickly down to zero. Another drawback in many prior art circuits is that although galvanic separation is provided, the isolation between the signal side and the power side may be insufficient and power may be fed back into the signal processing circuitry.

Besides, under regulatory considerations it is more and more desired or required that the design of a power supply circuit 1 complies with standardized safety requirements, particularly SIL_n such as SIL3 or PLe or HFT_n such as HFT1.

It is the object of the invention to provide a power supply circuit designed for reliably cutting off power supply in case of emergency or malfunction.

It is also an object to provide a supply circuit with reliable electric separation between the signal side and the power side of the circuit.

These objects are accomplished with the features of claim 1.

A supply circuit for rendering a controlled supply power has the features of claim 1. It comprises control signal circuitry which comprises power control command generation means for receiving or generating a power supply command and for generating internal switching control signals according to the power supply command. The control signal circuitry also comprises a first galvanic separation stage receiving the internal switching control signals and producing output control signals. The supply circuit also comprises power control circuitry. The power control circuitry comprises power input terminals connectable to an input power supply, a signal input for receiving said output control signals, a semiconductor power switch for switching on and off power drawn from said power input terminals in accordance with the output control signal, a first transformer with a first primary winding connected to said semiconductor power switch and to one of said power input terminals and a first secondary winding inductively coupled with said first primary winding, and a power output circuit connected to said first secondary winding and having power output terminals for supplying the controlled supply power.

The supply power may be of a fixed or of an adjustable target value. On-off-switching for correspondingly switching on and off a consumer such as an electric motor may be included. The supply power may be the input for another power controller, such as on/off switching, PWM control, phase angle control in case of AC output, or the like. But the supply power itself may be generated by a quantitative and possibly variable control, for example for controlling an electric motor into a desired speed or power consumption that may be variably set by corresponding target values.

The term "connected" may mean here a direct or indirect connection such that the components called "connected" substantially cooperate. They may receive substantially same signals and/or same power. The connection may nevertheless be direct or indirect with other components and/or circuit taps in between.

The described supply circuit has two separation stages. The one is provided on the signal side as a first galvanic separation stage that passes on control signals on the low power side. The second is the claimed first transformer in which the primary winding receives switched input power and transforms it to a secondary winding.

The first transformer implements a kind of fail-safe power supply. It provides power to a connected consumer only when it receives on the input side AC power. Some kind of fused transistor either in the signal branch or in the power branch will most likely not lead to AC, so that in case of such failures power supply to the secondary side of the first transformer ceases. Besides, the galvanic separation stage on the signal side substantially reduces the likelihood of electric high power reaching back in the signal branch.

The supply circuit can be seen as having a control branch and a power branch. The control branch may operate at relatively low voltages such as below 30 or 20 or 10 volts. The power branch may operate at higher voltages such as more than 20 or 40 or 50 volts, which may be AC or DC.

The first galvanic separation stage may be or comprise a second transformer with a second primary winding and a second secondary winding. The second transformer is then provided on the signal side of the circuitry and has a fail-safe characteristic as described above for the first transformer in the power branch of the circuit. If the second transformer does not receive AC components on its primary side, it will not transform anything to the secondary side. Likewise, the first galvanic separation stage may be or comprise an opto coupler. The opto-coupler of the first galvanic separation stage may be forwarding on/off signals used for switching the power downstream in the power branch of the circuit. The first galvanic separation stage particularly blocks electric high power from the power branch reaching back into the signal branch.

The power control command generation means may comprises a pulse width modulator. It may have a switching frequency exceeding 5 or 10 or 20 or 50 kHz.

PWM generates a series of pulses first on the control side and downstream in the power branch. The duty ratio of on-time relative to period duration is an important quantity for determining the quantity of transmitted power. Usually, PWM switches DC of a sufficiently powerful level, e.g. 48V or 60V or the like. The switching frequency may exceed 1 or 2 or 5 or 10 or 20 or 50 kHz.

The supply circuit may comprise at the control signal circuit a input power terminal connected to an emergency switch configured to cut off input power in case of emergency. The control signal circuitry is configured to stop the output of output control signals upon occurrence of power interruption at the input power terminal. The power from said input power terminal is the power supply for the control signal circuitry.

The overall emergency cut-off structure may be designed such that, in the one or other manner, forwarding pulses towards the power control circuitry is blocked or inhibited or stopped. Then, no pulses appear in the power branch, and accordingly the first transformer will not transform anything as dl/dt =0. An emergency circuitry may be provided that reacts on power loss caused by said emergency switch connected to the input power terminal. The emergency circuitry may, for example, cut off power supply of the control signal circuitry, or it may interrupt the signal output from the first galvanic separation stage. It may, for example, open a semiconductor switch in the signal output line, or may pull the signal output line to a fixed potential again for stopping pulses being forwarded for utilising the fail-safe property of the first transformer.

Accordingly, the emergency circuitry may stop the power control command generation means from generating internal switching control signals or may interrupt forwarding of the internal switching control signals or of the output control signals upon occurrence of said input power interruption.

The emergency power loss itself generated by the emergency switch and received at the input power terminal may be a short interruption or may be a longer interruption or may be a permanent interruption, requiring some kind of reset.

The power input terminals of the power control circuitry may receive DC as raw input power at said power input terminals. Continuous DC at the input terminals would then be converted into pulsating DC by the switching activity of the semiconductor power switch and is fed into the primary winding of the first transformer. The pulsation may be made according to a PWM scheme.

The power output circuit of the supply circuit may comprises a rectification circuit connected to the first secondary winding for rectifying the output voltage of said first secondary winding. At the secondary side of the first transformer, AC will appear in response to the primary side receiving an AC component. The rectification circuit would transform it into DC, if DC is desired as the controlled supply power. The rectification may be a half wave rectification with one diode or may be a full wave rectification with the known diode bridge rectangle, rendering plus and minus terminals. Smoothing capacitors may be provided on the DC output side of the rectification circuit for reducing pulsation.

The first transformer may comprise two or three or plural first secondary windings, each inductively coupled with said first primary winding, and may comprise plural power output circuits, each connected to a respective one of said plural first secondary windings, wherein each of said power circuits may comprise a respective rectification circuit connected to the respective first secondary winding for rectifying the respective output voltage of the respective first secondary winding.

The mentioned plural first secondary windings may be of same winding number or may have different winding numbers. Correspondingly, they would generate same AC voltage amplitudes or different AC amplitudes at the winding terminals, and correspondingly after rectification correspondingly different DC. Then, for example, a lower voltage output from one secondary winding could be used for feeding control circuitry, whereas, for example, a higher amplitude output could be used as power supply for a motor or the like.

It is pointed out in this context that the purpose of the described supply circuit may primarily be the provision of a constant power supply, either AC of constant amplitude or DC of a constant level. Its output may then be used as input for other controlling structures such as a phase angle controller or a PWM controller, for quantitative power control towards a consumer.

In case that a DC output power is decided, a rectification circuit may follow an AC output of a secondary winding. The rectification circuit may be or comprise a diode rectifier. It may be or comprise a half wave rectifier or a full waver rectifier. Two or more functionally parallel rectifiers, particularly full and/or half wave rectifiers, may be provided for having output circuits with some isolation against each other

The supply circuit and particularly the power control circuitry may be configured to receive AC at said power input terminals, e.g. from the normal AC power supply grid, such as 230V 50Hz or 110V 60Hz. It may then also comprise means for rectifying and smoothing the received AC, e.g. a diode bridge rectifier as a full wave rectifier and one or more smoothing capacitors. Then, again DC appears on the primary winding side of the first transformer that would be transformed by the semiconductor power switch into pulses according to the control signals from the control signal circuitry and would then generate a secondary AC output at the secondary winding of the first transformer.

In the described supply circuit, the control signal circuitry may comprise a control input terminal for receiving a power supply command. But likewise, the circuit may be designed without an externally accessible power supply command input terminal and may, thus, provide a fixed value defined by its construction. Nevertheless, the control signal circuitry may comprise one or more safety control terminals, particularly for switching off power generation. It may have an input for a manually operable emergency switch. It may also have an input for automatic monitoring result signals for switching off power generation.

A power supply command may explicitly be provided at the control signal circuitry or may implicitly be implemented by the various other circuit parameters of the control signal circuitry. It may be a qualitative on/off signal and/or may be a quantitative indication conveying some kind of quantitative information on the desired supply power, such as a target value of its DC level or AC amplitude. A PWM modulator would transform such a command into a suitable duty ratio of the pulses to be forwarded towards the power stage of the circuit. But likewise, regarding quantity, the circuit parameters may, for example, have a fixed duty ratio for PWM control, and no control input terminal may be provided then.

On and off of the overall circuit may come with power supply of the overall circuit being switched on and off elsewhere, but the circuit may also have a not shown on/off switch for jointly switching on and off the various components.

A feedback circuit may be provided between said power output circuit and said power control command generation means. It may render output power feedback or output voltage feedback. It may feed back monitoring results for the purpose of possibly shutting off power generation. Said feedback circuit may comprise a second galvanic separation stage that may comprise an opto coupler.

The feedback circuit may feed back qualitative or quantitative signals in a defined analog or digital format. It may feed back sensed quantities from the power control circuitry of the power stage, particularly from the secondary winding of the first transformer or downstream thereof, more particularly from the output of a possibly provided rectification circuit, towards the control signal circuitry for proper processing there. The fed-back signal may be compared against some kind of target value or target range or threshold, either pre-set or firmly inscribed into the circuit or given by some kind of input, e.g. from the mentioned control input terminal. The feedback circuit is designed such that the fed-back values reflect in some manner the output voltage or output power of the supply circuit so that the supply power of the supply circuit can finally be feedback controlled. The feedback circuit may have at its input side, i.e. at the secondary winding side of the first transformer, a suitable signal tap, for example a voltage tap at the output and may have signal shaping circuitry. A possibly provided second galvanic separation stage may be suited for quantitative signal transmission so that a quantitative information can be fed-back across said second galvanic separation stage.

The feedback circuit may instead or also feed back processing results obtained in the power control circuitry to the control signal circuitry, such as yes/no result signals in a known format on target value monitoring or target range monitoring or threshold monitoring made in the power control circuitry. In the monitoring control signal circuitry, such fed-back result signals may be used for interrupting power supply.

The winding ratio of said first transformer, defined as winding number of one or more of the first secondary windings divided by the winding number of the first primary winding may be larger than 0,2 or 0,5 or 0,8 and may be smaller than 10 or 5 or 2 or 1,5. Likewise, the winding ratio of said second transformer defined as winding number of the second secondary winding divided by the winding number of the first primary winding may be larger than 0,2 or 0,5 or 0,8 and may be smaller than 10 or 5 or 2 or 1,5. The duty ratio of said possibly provided PWM modulator may be a fixed value that may be larger than 0,2 or 0,3 or 0,4 and may be smaller than 0,8 or 0,7 or 0,6, or is determined in accordance with the power supply command (psc) received at a control input terminal.

The mentioned numbers reflect the fact that the provided transformers and the possibly provided PWM modulator are not so much for quantitative power control, but are provided more for the mentioned fail-safe properties of the transformers, used in conjunction with pulsating signals or power.

An electric consumer system comprises an electric consumer and an electric power supply for said consumer. The consumer may be or comprise a motor, particularly a rotary motor or a linear motor of a carrier system, or may be or comprise a heater, a machine tool, control or computer equipment, lighting or the like. The electric power supply has a supply circuit as described or claimed and feeds the consumer directly or indirectly.

In the following, embodiments of the invention will be explained with reference to the drawings, in which
Figure 1 is a schematic block diagram of aspects of the invention,
Figures 2A and 2B show galvanic separation stages,
Figure 3 shows an embodiment of a power output circuit,
Figure 4 shows a feedback structure,
Figure 5 shows an overall circuit, and

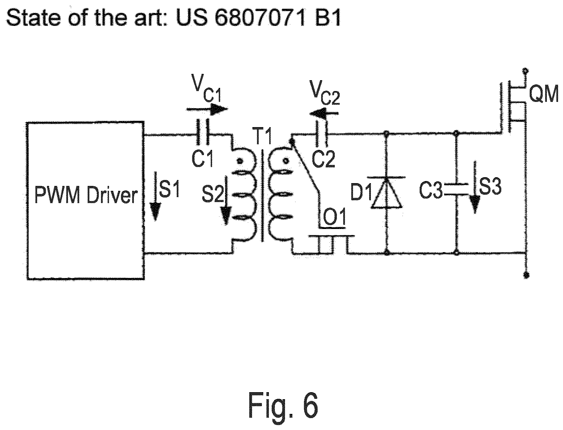

Figure 6 shows prior art.

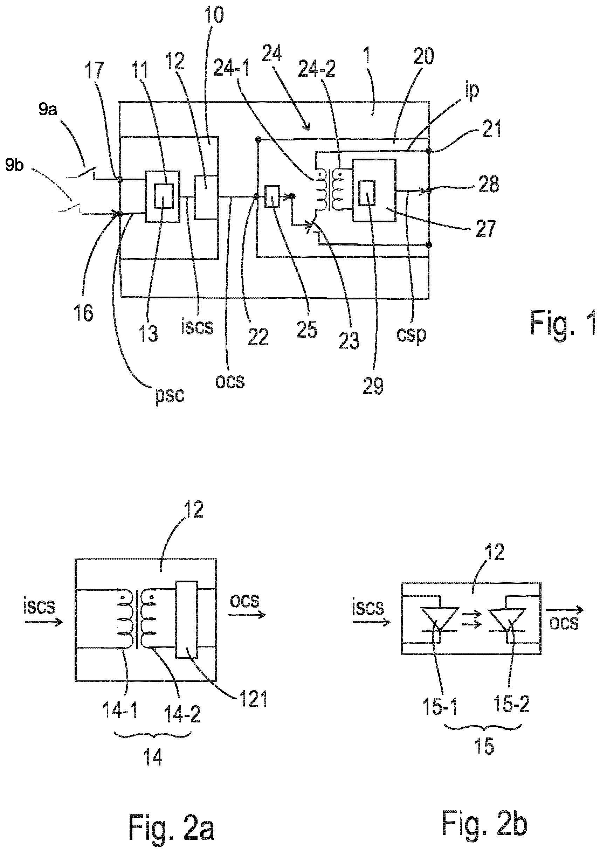

Figure 1 shows the supply circuit 1 having control signal circuitry 10 and power control of circuitry 20. The control signal circuitry 10 has input power terminals 16 and 17 for its power supply and comprises power control command generation means 11 that generates in some manner internal switching control signals iscs which may be a pulse train. Said pulse train of internal switching control signals iscs is generated in accordance with a power supply command psc, which may be either firmly inscribed into the circuit or which may be received from external from a not shown terminal. Input power at terminals 16 and 17 may be AC or DC. It may be relatively low. It may be below 50 or 30 or 20 or 10 volts. It may be higher than 10 or 20 volts. It may finally be DC supplied to the various components of the control signal circuitry 10.

The control signal circuitry 10 further comprises the first galvanic separation stage 12 into which the internal switching control signals iscs are input and which renders at its output output control signals ocs. The internal switching control signals iscs may be a pulse train, and the output control signals may be a corresponding pulse train, galvanically separated from the upstream circuitry.

The power control command generation means 11 may comprise an inverter or a chopper or a pulse width modulator 13 that generates a pulse signal, particularly pulse width modulation signals as internal switching control signals iscs. The pulses may have a fixed pulse frequency and may also have a fixed or adjustable duty ratio. The pulse frequency may be higher than 1 or 2 or 5 or 10 or 20 or 50 kHz. It may be lower than 100 or 50 or 20 kHz. The duty ratio may be defined as the ratio of on-time to period duration. It may be a fixed value higher than 0,1 or 0,2 or 0,4. It may be lower than 0,9 or 0,8 or 0,6. But likewise, the duty ratio of the pulse width modulator 13 may be adjustable in accordance with a power supply command psc that may be received from a control input terminal of the supply circuit 1, not shown in the figures.

9 symbolises an external emergency switch that may, for example, be an easily accessible and possibly well visible push button type switch that may be hit in an emergency situation. It is usually closed, i.e. conductive, so that power is supplied to the power control command generation means 11. It may automatically and/or manually be opened, i.e. made non-conductive, in an emergency or a similar situation and interrupts then at least one of the input power lines to terminals 16 or 17 so that then power supply to the power control command generation means 11 is cut off and the control signal circuitry 10 produces no signal towards its output. An external emergency switch 9 may be connected to one or both of the input power terminals 16 and 17 for connecting and discionnecting them from a power source.

The emergency switch 9 may be a mechanical or a semiconductor switch. It may be manually operable and/or may be automatically operable. Automatic operation may be commanded from some kind of monitoring apparatus that recognizes in predetermined manner predetermined unwanted situations requiring power interruption. The emergency switch 9 may have both switching states "on" and "off" as stable states, requiring a respective commanded or manual or automatic conditional switchover from the one to the other.

The layout may be further such that, upon input power interruption by switch 9, forwarding the internal switching control signals iscs is actively interrupted for example by interrupting the signal line with an appropriate switch, such as an electronic switch such as an on-off-transistor, or by drawing the signal line carrying the internal switching control signal iscs or the output control signal ocs to a fixed potential, again by some kind of electronic switch such as an on-off-transistor. As a result, forwarding a pulse train as output control signal ocs is inhibited quickly, so that no output control signals reach the power control circuitry. The same holds in case that for some circuit malfunction, pulse generation in the power control command generation means 11 has stopped.

20 in Figure 1 is the power control circuitry of the power stage. It has a signal input, symbolized as a terminal 22 in Figure 1, at which the output control signal ocs from the control signal circuitry 10, particularly from isolator 12, is received. It is the mentioned pulse train. It may pass through some kind of driving circuitry 25 and is used to control at least one semiconductor power switch 23. Said switch 23 may be a power MOSFET receiving the driving signal from input 22 or driver 25 at its gate, or it may be an IGBT receiving said signal at its basis. Power switch 23 is in series connection with a primary winding 24-1 of a first transformer 24.

Generally speaking, "series connection" here means receiving substantially the same current and may mean, but needs not necessarily mean, that the components are directly connected to each other. Other circuit elements may be in between, and taps between them may exist for guiding off a potential or minor current amounts, e.g. for signalling or control purposes.

The series connection of power switch 23 and primary winding 24-1 of first transformer 24 is connected to power input terminals 21 for receiving an input power ip. Preferably, said input power is constant DC of a desired level. But likewise, it may be AC that is rectified and smoothed before reaching the primary winding 24-1 of the first transformer 24. A secondary winding 24-2 is inductively coupled with the primary winding 24-1 of the first transformer 24. When power through the primary winding 24-1 of the first transformer 24 is repeatedly switched on and off by power switch 23 in accordance with the received output control signal ocs, the first transformer 24 experiences an AC component at its primary winding and induces a corresponding magnetic field into the secondary winding 24-2, thus producing an AC signal at the terminals of the secondary winding 24-2.

The secondary winding 24-2 is connected to a power output circuit 27 that forwards the electric power appearing at the secondary winding 24-2 more or less directed towards power output terminals 28 as the desired controlled supply power csp. If AC is desired as said controlled supply power csp, the voltage from the secondary winding 24-2 may more or less directly be forwarded to the power output terminals 28. But vice versa, if DC is desired, the power output circuit 27 may comprise a rectification circuit. It may be a diode rectifier. It may be a full wave diode rectifier or may be a half wave rectifier.

The winding ratio of primary winding 24-1 and secondary winding 24-2 of the first transformer 24 may be more or less 1, such as between 0,9 and 1,1.The claimed circuit may be adapted to be connected into an existing power supply for rendering galvanic separation and providing the mentioned fail-safe properties. In such cases, the output level of the controlled supply power csp at terminal 28 should be the same DC level as that of the input power ip at terminals 21. One or both may be a DC voltage level of more than 10 or 20 or 50 V and/or may be less than 100 or 50 V.

It is preferred that control signal circuitry 10 and power control of circuitry 20 do not have a common ground, but have independent, not connected ground lines.

In case a pulse width modulation is used in the power control command generation means 11, its duty ratio may be substantially 0,5, such as between 0,45 and 0, 55.

Figure 2a shows an example of the first galvanic separation stage 12 in Figure 1. It is formed as a second transformer 14 with a primary winding 14-1 and a magnetically coupled secondary winding 14-2. Signal flow is from left to right. At its input it receives the internal switching control signal from the power control command generation means 11, which may, as said above, be PWM pulses. They have an AC component reaching the primary winding 14-1, which is transformed into the secondary winding 14-2. A signal shaping circuit 121 may be provided on the secondary side of the second transformer 14 for shaping the output signals in desired manner, particularly to be a more or less rectangular pulse train that may be used, for example, for PWM.

Again, if no pulse train reaches the primary winding 14-1, no voltage will be induced in the secondary winding 14-2. This renders an intrinsic fail-safe behaviour in case that pulse train generation does not work or is interrupted.

Figure 2b shows an opto-coupler as an example for the first galvanic separation stage 12. It comprises some kind of light emitter 15-1 such as an LED, and some kind of light receiver, such as a photo diode 15-2. Together, light emitting diode 15-1 and photo diode 15-2 form the opto-coupler 15 in the shown embodiment. On the output side, signal shaping circuitry 121 may be provided as shown in Figure 2a for rendering a shaped pulse train, if needed.

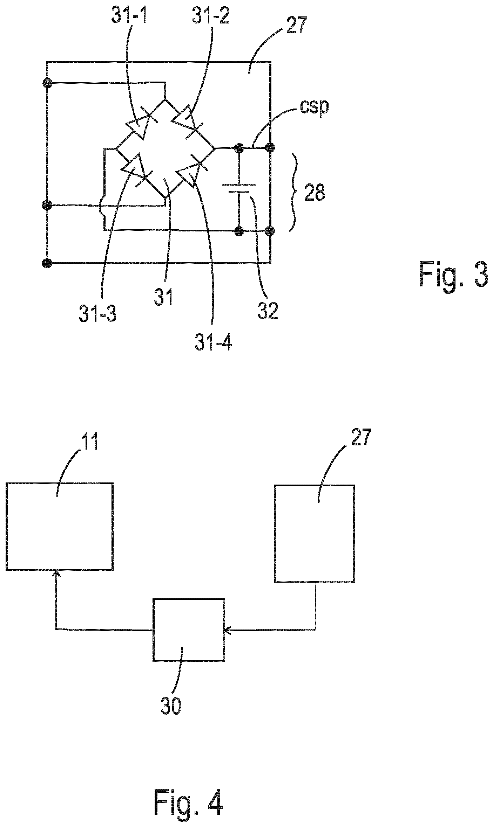

Figure 3 shows an example of the power output circuit 27 of the power control circuitry 20. It is a full wave rectifier with diodes 31-1, 31-2, 31-3 and 31-4. Its AC input terminals are connected to the secondary winding 24-2 of the first transformer 24. Its DC terminals may more or less directly be coupled to the power output terminals 28 of the supply circuit 1. Smoothing means, such as a capacitor 32, may be provided on the DC side.

Figure 4 shows a possibly provided feedback structure. It feeds back a voltage-related value from the power control circuitry 20 to the control signal circuitry 10. More in detail, it may capture a signal from the power output circuit 27, and again more in detail, it may send an output-voltage-related value from there. For example, in Figure 3, it may receive the DC output voltage from terminal 28, also appearing at capacitor 32.

Appropriate signal shaping means 30 may be provided in the feedback branch. It may comprise a second galvanic separation stage. Depending on the quality of the input signals, it may be formed as explained in Figures 2a or 2b, with signal flow, however, being from right to left. The separation stage may be suited for quantitative signal forwarding, which is, in figure 4, from right to left. In the control signal circuitry 10, particularly in the power control command generation means 11, the fed-back value may appropriately be processed. Particularly, it may be computed against a possibly provided command value by providing a controller of appropriate control characteristics depending on the deviation between actual and target value. A more or less regular feedback structure may be implemented with means for determining the difference between a given target value and the fed-back actual value, and with a controller with said difference as input and a suitable characteristics.

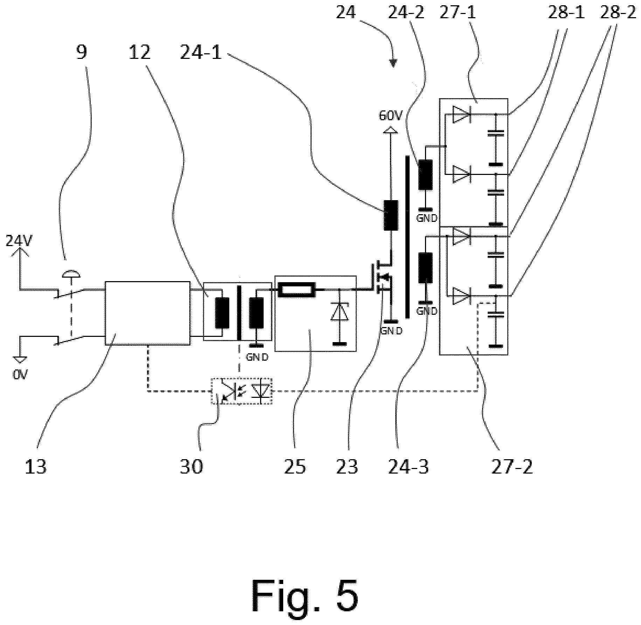

Figure 5 shows an overall circuit. Same numerals as in the earlier figures mean same components. The power control command generation means 11 may be formed as an inverter or a PWM controller 13. Switch 9 is shown here to be provided to switch on/off both input power terminals of PWM controller 13, corresponding to terminals 16 and 17 in figure 1. The first separation stage 12 is formed by a second transformer 14 as shown in Figure 2a. The driving circuit 25 comprises a resistor and a voltage limiting Zener diode connected to ground of the circuit on the primary side of the first transformer 24. Emergency switch 9 is connected to interrupt power supply to said PWM controller. The control signal circuitry 10 may be designed to operate at a first DC voltage level, of for example larger than 10 or 15 or 20 volt and for example lower than 30 or 20 volt. The direction from left to right in the figure indicates signal flow.

The direction from the top to the right indicates power flow. The power control circuitry 20 may be configured to operate at a higher DC voltage, preferably higher than 40 or 50 volts, it may be smaller than 100 or 80 volts. The first transformer 24 has one primary winding 24-1 and may have one or, as shown, two or more secondary windings 24-2 and 24-3 on the secondary side. They are provided functionally in parallel and may have different winding numbers for producing different voltage levels. Parallel secondary windings provide some separation of the respectively connected output circuits against each other. Each secondary winding 24-2 and 24-3 may have one or more own power output circuits 27-1 and 27-2 for a preferably constant AC or DC.

In the shown embodiment, DC outputs are desired. Thus, the power output circuits 27 have diodes for rectification, particularly half wave or full wave rectification. Fig. 5 shows that two independent and functionally parallel rectifiers are connected to one of the secondary windings. Such parallel rectifiers windings provide some separation of the respectively connected output circuits against each other. Smoothing means may be provided. Two same or similar rectifiers may be provided at one or more of the secondary windings in parallel orientation with respective detection means at each of them for allowing cross-checking amongst them for failure detection.

It is preferred that the secondary side or windings of the first transformer 24 is galvanicaly isolated from its primary side. Accordingly, also ground layers of the two transformer sides would be different and are not be connected. Similarly, the control signal circuitry 10 is preferably completely galvanically isolated from the primary side of the first transformer 24, meaning that also ground of the control signal circuitry 10 is different from that of the primary side of the first transformer 24.

The described power supply circuit is preferably a power supply circuit for providing one or in parallel two or plural different constant DC voltages. Adjustable target values may not be intended. But the described feedback may be provided for rendering a precise control for the desired fixed target voltage levels.

The DC voltage at the output terminals 28 may be used for driving moveable components, such as carriers in a rail-based multi carrier system. There, driving the carriers is made by control components for said carrier control that may receive the output from the output terminals as their power input. The control components may again comprise power control for controlling the dynamics of the carriers to be controlled. Power control in this context may then again, for example, be PWM. Accordingly, the claimed supply circuit may provide one or more rated output DC voltages at its output terminals 28, 28-1, 28-2. Said terminals may be connected to the power supply input of a PWM controller for controlling said carriers.

The design of the power supply circuit 1 may be such that it complies with standardized safety requirements, particularly a SIL standard such as SIL3 or PLe or a HFT standard such as HFT1. The two separation stages provide a reliable separation of the various circuit stages and have, where transformers are provided, the mentioned fail-safe property.

A further aspect of the invention is an electric consumer system comprising an electric consumer and an electric power supply for said consumer. The consumer may be a motor, particularly a rotary motor or a linear motor of a carrier system, or may be a heater, a machine tool, computer equipment, lighting or the like. The electric power supply comprises a supply circuit as described or claimed. It may also comprise a PWM controller or a phase angle controller between the output terminals 28 of said supply circuit and the power input of said consumer.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Features described as part of an embodiment or a figure shall be deemed separable from this embodiment or figure and shall be deemed combinable with features of other embodiments or figures, as far as technically possible. Descriptions of a method or procedure or a method step or a procedural step shall be understood also as a description of means for implementing the method or procedure or method step or procedural step and/or shall possibly also be understood as a description of an artefact made or modified by said method or procedure or method step or procedural step and/or shall possibly also be understood as a description of a data carrier holding program instructions of executable code adapted for implementing the method or procedure or method step or procedural step, and vice versa. In the present specification, references to the "invention" address the teaching as subjectively conceived by the inventors.

### List of reference numerals

- 1: Power supply circuit
- 9: Emergency switch
- 10: Control signal circuitry
- 11: Power control command generation means
- 12: First separation stage
- 13: Pulse width modulator
- 14: Second transformer
- 14-1: Primary winding
- 14-2: Secondary winding
- 15: Opto-coupler
- 15-1: LED
- 15-2: Photo diode
- 16, 17: Input power terminals
- 20: Power control circuitry
- 21: Power input terminal
- 22: Signal input terminal
- 23: Semiconductor switch
- 24: First transformer
- 24-1: Primary winding
- 24-2: Secondary winding
- 24-3: Secondary winding
- 25: Driver
- 27: Power output circuit
- 28, 28-1, 28-2: Power output terminals
- 29: Rectification circuit
- 30: Feedback circuit
- 31: Diode rectifier
- 31-1 to 31-4: Diodes
- 32: Capacitor
- 121: Signal shaping circuit

## Claims

1. Supply circuit (1) for rendering a controlled supply power (csp), comprising
(a) control signal circuitry (10) comprising
(a1) power control command generation means (11) for receiving or generating a power supply command (psc) and for generating internal switching control signals (iscs) according to the power supply command (pcs) for controlling power supply,
(a2) a first galvanic separation stage (12) receiving at its input the internal switching control signals (iscs) and producing at its separation output (12-1) output control signals (ocs), and
(b) power control circuitry (20) comprising
(b1) power input terminals (21) connectable to an input power supply for receiving an input power (ip),
(b2) a signal input (22) connected to said separation output (12-1) for receiving said output control signals (ocs) from said control signal circuitry (10),
(b3) a semiconductor power switch (23) for switching on and off power drawn from said power input terminals (21) in accordance with the output control signal (ocs) from said signal input (22),
(b4) a first transformer (24) comprising a first primary winding (24-1) connected to said semiconductor power switch (23) and to one of said power input terminals (21) and a first secondary winding (24-2) inductively coupled with said first primary winding (24-1), and
(b5) a power output circuit (27) connected to said first secondary winding (24-2) and having power output terminals (28) for supplying the controlled supply power (csp).

2. The supply circuit (1) of claim 1, wherein the first galvanic separation stage (12) comprises a second transformer (14) with a second primary winding (14-1) and a second secondary winding (14-2), or comprises an opto coupler (15).

3. The supply circuit (1) of one of the preceding claims, wherein the power control command generation means (11) comprises a pulse width modulator (13) of a switching frequency that may exceed 5 or 10 or 20 or 50 kHz,
wherein the duty ratio of said PWM modulator (13) may be a fixed value that may be larger than 0,2 or 0,3 or 0,4 and may be smaller than 0,8 or 0,7 or 0,6, or is determined in accordance with the power supply command (psc) received at a control input terminal.

4. The supply circuit (1) of one of the preceding claims, comprising at the control signal circuitry (10) an input power terminal (16, 17) for connecting an emergency switch (9) configured to interrupt power supply to said power terminal (16, 17), wherein the control signal circuitry (10) is configured to stop the output of output control signals (ocs) upon occurrence of power supply interruption at the input power terminal (16, 17), wherein the power control command generation means (11) may be configured to stop generation of internal switching control signals or to interrupt forwarding of the internal switching control signals (iscs) or of the output control signals (ocs) upon occurrence of said power supply interruption.

5. The supply circuit (1) of one of the preceding claims, wherein the control signal circuitry (10) comprises a control input terminal for receiving a power supply command (psc).

6. The supply circuit (1) of one of the preceding claims, wherein the power control circuitry (20) is configured to receive DC as input power (ip) at said power input terminals (21), wherein the voltage level of said DC may be more than 10 or 20 or 50 V and/or may be less than 100 or 50 V.

7. The supply circuit (1) of one of the preceding claims, wherein the first transformer (24) comprises plural first secondary windings (24-2), each inductively coupled with said first primary winding (24-1), and plural power output circuits (27), each connected to a respective of said first secondary winding (24-2), wherein each of said power circuits (27) may comprise a respective rectification circuit (29) connected to the respective first secondary winding (24-2) for rectifying the respective output voltage of the respective first secondary winding (24-2),
wherein the rectification circuit (29) may comprise one or more half wave rectification circuits or a full wave rectification circuit, preferably formed by one or more diodes, and smoothing means, preferably formed by one or more capacitors, and may comprise voltage monitoring means or a voltage monitoring tap for feedback purposes.

8. The supply circuit (1) of one of the preceding claims, configured to receive DC at said power input terminals (21).

9. The supply circuit (1) of one of the preceding claims, configured to receive AC at said power input terminals (21), and comprising means for rectifying and smoothing the received AC.

10. The supply circuit (1) of one of the preceding claims, wherein the control signal circuitry (10) comprises a control input terminal for receiving a power supply command (psc).

11. The supply circuit (1) of one of the preceding claims, comprising a feedback circuit (30) between said power output circuit (27) and said power control command generation means (11), configured to render output power feedback or output voltage feedback, said feedback circuit preferably comprising a second galvanic separation stage (34) that may comprise an opto coupler.

12. The supply circuit (1) of claims 11 and 7, wherein the feedback circuit (30) is connected to the output side of said rectification circuit (29).

13. The supply circuit (1) of one of the preceding claims, wherein the winding ratio of said first transformer (24) defined as winding number of the first secondary winding (24-2) divided by the winding number of the first primary winding (24-1) may be larger than 0,2 or 0,5 or 0,8 and may be smaller than 10 or 5 or 2 or 1,5.

14. The supply circuit (1) of one of the preceding claims and claim 2,
wherein the winding ratio of said second transformer (14) defined as winding number of the second secondary winding (14-2) divided by the winding number of the first primary winding (14-1) may be larger than 0,2 or 0,5 or 0,8 and may be smaller than 10 or 5 or 2 or 1,5.

15. Electric consumer system comprising
an electric consumer, and
an electric power supply for said consumer, said electric power supply comprising a supply circuit (1) according to one of the preceding claims, wherein the power supply may also comprise a PWM controller or a phase angle controller connected with its input to the output terminals (18) of the supply circuit (1).
